# FASCICULE DE BREVET EUROPEEN

(11) **EP 2 960 271 B1**
(45) Date de publication et mention de la délivrance du brevet: **19.02.2020**
(21) Numéro de dépôt: 15173471.2
(22) Date de dépôt: 23.06.2015
(51) Int. Cl.: C08J 5/18, C08L 27/06, C08J 3/00, C08F 265/04

(54) **PROCEDE POUR LA PREPARATION D'UN POLYMERE DU CHLORURE DE VINYLE**
VERFAHREN ZUR HERSTELLUNG EINES VINYLCHLORID-POLYMEREN
METHOD FOR PREPARING A POLYMER OF VINYL CHLORIDE

(30) Priorité: 25.06.2014 FR 1455917
(43) Date de publication de la demande: 30.12.2015
(73) Titulaire: Inovyn Europe Limited, Runcorn, Cheshire WA7 4JE (GB)
(72) Inventeur: BOSCHET, Frédéric, 1120 Brussels (BE); BIRAL, François, 1348 Ottignies-Louvain-La-Neuve (BE); BODART, Vincent, 5001 Namur (BE)
(74) Mandataire: King, Alex

(56) Documents cités:
- WO-A1-2012/065901
- JP-A- 2008 063 424
- US-A- 4 272 424
- US-A1- 2003 199 628
- ABIR S. ABDEL-NABY: AMERICAN JOURNAL OF APPLIED SCIENCES, vol. 8, no. 7, 2011, pages 675-680,

## Description

La présente invention concerne un procédé pour la préparation d'un polymère du chlorure de vinyle (PVC). Elle concerne plus particulièrement un procédé pour la préparation d'un tel polymère incluant une étape de polymérisation effectuée en dispersion aqueuse, le plus souvent en émulsion aqueuse.

Le PVC est l'un des plus importants matériaux thermoplastiques commercialisés à l'heure actuelle. Compte tenu de ses très bonnes propriétés mécaniques et physiques, il est utilisé dans un grand nombre d'applications dont la majorité d'entre elles nécessitent une mise en œuvre à des températures élevées auxquelles le PVC vierge résiste difficilement. Améliorer la stabilité thermique du PVC a donc été une préoccupation depuis toujours et des solutions ont bien évidemment été recherchées.

Parmi celles-ci, l'additivation du PVC par des composés inorganiques ou organiques assurant le rôle de stabilisants thermiques est étudiée depuis de longues années avec la recherche continue de nouveaux stabilisants thermiques afin de remplacer les premiers stabilisants thermiques identifiés présentant le désavantage de contenir des métaux lourds non appréciés d'un point de vue environnemental. Cette alternative présente toutefois le désavantage de nécessiter une étape de mélange du PVC après sa synthèse par polymérisation et son isolement complet du milieu de polymérisation.

Afin d'éviter ces étapes distinctes, une autre voie qui a été explorée est l'ajout d'un composé époxydé, de préférence liquide à la température ordinaire comme les esters d'acide gras époxydés tels l'huile de soja époxydée et l'huile de lin époxydée, à un latex de PVC avant que celui-ci ne soit séché par atomisation et qu'une résine de PVC stabilisée thermiquement ne soit obtenue. C'est ce que décrit la demande de brevet JP-A-09151201. Néanmoins, il s'avère que pour que l'efficacité de ces esters d'acide gras époxydés sur la stabilité thermique du PVC soit suffisante, il est requis d'en ajouter une quantité élevée, ce qui a pour désavantage d'influencer négativement les autres propriétés du PVC. De plus, il a été constaté qu'au cours du temps, ce type d'additif migre/exsude vers la surface de l'article fabriqué avec le PVC additivé, ce qui n'est évidemment pas acceptable.

Pour éviter ces inconvénients et considérant que les composés avec des fonctions époxydes ont un effet positif sur la stabilité thermique du PVC, on a dès lors envisagé de mélanger le PVC en poudre obtenu à l'issue de la polymérisation avec un polymère du méthacrylate de glycidyle (PGMA) en poudre également. Ainsi, M. W. Sabaa, Z. R. Farag et N. A. Mohamed, Journal of Applied Polymer Science, vol. 110, 2205-2210 (2008) ont étudié la dégradation thermique du PVC en présence de PGMA et d'éventuellement un stabilisant thermique (carbonate de plomb dibasique (DBLC)) pour conclure que le PGMA est un bon stabilisant thermique pour le PVC quand il est utilisé seul ou en mélange avec le DBLC.

Abir S. Abdel-Naby , American Journal of Applied Sciences, 8 (7), 675-680, 2011 a également étudié la stabilité thermique du PVC additivé de PGMA mais en considérant des mélanges de PVC avec du PGMA réalisés par la voie solvant. Une solution du PVC dans le tétrahydrofurane (THF) a ainsi d'abord été préparée en mélangeant du PVC solide avec différents additifs dans le THF. Une solution de PGMA dans le THF préparée au préalable par polymérisation du GMA dans ce solvant a ensuite été ajoutée à la solution de PVC. Cette solution a ensuite permis de réaliser des films de PVC additivé de PGMA après élimination du THF.

Ces deux dernières alternatives présentent toutefois également le désavantage de nécessiter une étape de mélange du PVC après sa synthèse par polymérisation et son isolement complet du milieu de polymérisation et pour la dernière d'entre elles, les inconvénients supplémentaires de nécessiter l'intervention d'un solvant avec tous les inconvénients qui y sont liés et une dissolution du PVC dans ce solvant pour y ajouter le PGMA.

Pour éviter les étapes distinctes de la polymérisation et de l'additivation, une autre alternative qui a été envisagée est la copolymérisation du chlorure de vinyle (VC) avec le méthacrylate de glycidyle (GMA) conduisant à des copolymères VC-GMA.

La Demanderesse a néanmoins constaté que cette dernière alternative et celle d'un mélange PVC/PGMA, bien que conduisant à une amélioration de la stabilité thermique du PVC, présentent l'inconvénient de conduire à une résine de PVC qui se caractérise par une quantité non négligeable d'épichlorohydrine lorsqu'elle est soumise à une sollicitation thermique, épichlorohydrine qui présente le grand désavantage d'être toxique (classification T selon l'annexe I de la Directive 67/548/EEC) et carcinogène (classification R45 selon le même document).

La Demanderesse a donc mis au point (demande de brevet WO 2014/096224) un procédé pour la préparation de PVC additivé d'un polymère contenant des fonctions époxydes comprenant une étape de polymérisation du VC en dispersion aqueuse en présence d'un latex semence de ce polymère contenant des fonctions époxydes.

Bien que ce procédé présente de nombreux avantages et permette de résoudre les inconvénients présentés par les procédés selon l'art antérieur, il subsiste néanmoins un besoin d'amélioration car la technologie d'ensemencement concernée n'est pas facile à mettre en œuvre. Elle implique en effet d'être parfaitement maîtrisée (afin d'éviter la formation d'initiations secondaires) et contrôlée durant toute la polymérisation (risque de dégradation de la semence et difficulté de contrôler/respecter la proportion de polymère incorporé contenant des fonctions époxydes). Ce procédé est également affecté du risque non négligeable de perte du latex semence relativement coûteux, en cas de problèmes durant la polymérisation du VC. Enfin, ce procédé nécessite un ajustement des recettes de polymérisation du VC existantes, ce qui engendre la nécessité d'un développement plus conséquent.

La présente invention vise donc à fournir un procédé pour la préparation de PVC qui ne présente pas les inconvénients précités tout en fournissant un PVC se caractérisant par une très bonne stabilité thermique.

La présente invention concerne donc à titre principal un procédé pour la préparation d'un PVC, additivé d'un polymère contenant des fonctions époxydes comprenant
- une étape selon laquelle on ajoute un latex d'additivation d'un polymère contenant des fonctions époxydes à un latex d'un polymère du chlorure de vinyle pour obtenir un latex du polymère du chlorure de vinyle additivé du polymère contenant des fonctions époxydes ; et
- une étape de séparation du polymère du chlorure de vinyle additivé du polymère contenant des fonctions époxydes du latex le contenant conduisant à l'obtention dudit polymère du chlorure de vinyle.

Dans la présente description, les termes «monomère», «polymère», «initiateur», «agent émulsionnant», et «article» sont utilisés indistinctement au singulier comme au pluriel.

Le polymère préparé par le procédé selon l'invention est un polymère du chlorure de vinyle. Dans la présente description, on entend désigner par les termes «polymère du chlorure de vinyle», tous les polymères contenant au moins 60 % en poids, de préférence au moins 70 % en poids, de manière particulièrement préférée au moins 75 % en poids et de manière tout particulièrement préférée au moins 85 % en poids d'unités monomériques dérivées du VC (monomère), donc aussi bien les homopolymères du VC (contenant 100 % en poids d'unités monomériques dérivées du VC) que les copolymères du VC avec un ou plusieurs monomères éthyléniquement insaturés (appelés comonomères) choisis parmi les esters vinyliques comme l'acétate de vinyle et les monomères (méth)acryliques comme l'acrylate de n-butyle et le méthacrylate de méthyle. Parmi tous les PVC mentionnés ci-dessus, la préférence est accordée aux homopolymères du VC et aux copolymères du VC avec l'acétate de vinyle. Le polymère préparé par le procédé selon l'invention est de manière tout particulièrement préférée un homopolymère du VC.

Le latex d'additivation d'un polymère contenant des fonctions époxydes peut être ajouté à un latex d'un PVC préparé au préalable ou il peut être ajouté au latex d'un PVC lors de la préparation de celui-ci.

De préférence, le latex d'additivation d'un polymère contenant des fonctions époxydes est ajouté au latex d'un PVC lors de la préparation de celui-ci. Ainsi, la présente invention concerne de préférence un procédé pour la préparation d'un PVC additivé d'un polymère contenant des fonctions époxydes, comprenant
- une étape de polymérisation du VC, et éventuellement d'un ou plusieurs comonomères de celui-ci, effectuée en dispersion aqueuse en présence d'au moins un initiateur de polymérisation et d'au moins un agent émulsionnant conduisant à l'obtention d'un latex d'un PVC;
- une étape selon laquelle on ajoute un latex d'additivation d'un polymère contenant des fonctions époxydes au latex du PVC obtenu à l'issue de l'étape de polymérisation pour obtenir un latex du PVC additivé du polymère contenant des fonctions époxydes ; et
- une étape de séparation du polymère du chlorure de vinyle additivé du polymère contenant des fonctions époxydes du latex le contenant conduisant à l'obtention dudit polymère du chlorure de vinyle.

L'étape de polymérisation du VC comprise dans le procédé de préparation du polymère de VC selon l'invention est effectuée en dispersion aqueuse, avantageusement ensemencée ou non ensemencée, en présence d'au moins un initiateur de polymérisation et d'au moins un agent émulsionnant. Par ces termes, on entend désigner, dans la présente description, les polymérisations réalisées selon un mécanisme radicalaire en émulsion aqueuse, avantageusement ensemencée ou non ensemencée, ou en microsuspension aqueuse, avantageusement ensemencée ou non ensemencée.

Par polymérisation en émulsion aqueuse, on entend désigner, tout procédé de polymérisation s'effectuant en milieu aqueux en présence d'au moins un agent émulsionnant à titre de surfactant et d'au moins un initiateur de polymérisation, de préférence hydrosoluble. Lorsque la polymérisation en émulsion aqueuse est ensemencée, le procédé de polymérisation s'effectue en outre avantageusement en présence d'un latex semence.

Par polymérisation en microsuspension aqueuse, encore appelée en dispersion aqueuse homogénéisée ou en miniémulsion, on entend désigner tout procédé de polymérisation dans lequel on met en oeuvre au moins un initiateur de polymérisation, de préférence oléosoluble, et on réalise une émulsion de gouttelettes de monomères grâce à une agitation mécanique puissante et qui se caractérise par la présence d'au moins un agent émulsionnant à titre de surfactant. L'agitation mécanique peut être prodiguée par un moyen mécanique approprié tel que, par exemple, un moulin colloïdal, une pompe rapide, un agitateur à vibrations, un générateur à ultra-sons, un homogénéiseur à haute pression, etc. Lorsque la polymérisation en microsuspension aqueuse est ensemencée, le procédé de polymérisation s'effectue en outre avantageusement en présence d'un latex semence.

L'étape de polymérisation du VC est de préférence effectuée en émulsion aqueuse, avantageusement ensemencée ou non ensemencée.

L'étape de polymérisation du VC comprise dans le procédé selon l'invention est effectuée en présence d'au moins un initiateur de polymérisation.

Par l'expression « au moins un », on entend désigner que l'étape de polymérisation est effectuée en présence d'un ou de plusieurs initiateurs de polymérisation.

Si la polymérisation est effectuée en émulsion aqueuse, l'étape de polymérisation est effectuée avantageusement en présence d'au moins un initiateur de polymérisation hydrosoluble.

Les initiateurs hydrosolubles sont avantageusement des peroxydes hydrosolubles ou des diazocomposés hydrosolubles.

A titre d'exemples de peroxydes hydrosolubles, on peut citer les persulfates de métaux alcalins ou d'ammonium, le peroxyde d'hydrogène, les perborates et l'hydroperoxyde de t-butyle.

A titre d'exemples de diazocomposés hydrosolubles, on peut citer l'acide 4,4'-azobis (4-cyanovalérique) et le dihydrochlorure de 2,2'-azobis(2-méthylpropionamidine).

Les initiateurs hydrosolubles sont choisis de préférence parmi les peroxydes hydrosolubles, de manière particulièrement préférée parmi les persulfates de métaux alcalins ou d'ammonium et le peroxyde d'hydrogène. Le persulfate d'ammonium est tout particulièrement préféré.

La quantité d'initiateur de polymérisation hydrosoluble mise en oeuvre varie avantageusement entre 0,2 et 3,5 ‰ en poids, de préférence entre 0,25 et 2 ‰ en poids et de manière particulièrement préférée entre 0.3 et 1 ‰ en poids, par rapport au poids de monomère(s) mis en œuvre.

Si la polymérisation est effectuée en microsuspension aqueuse, l'étape de polymérisation est effectuée avantageusement en présence d'au moins un initiateur de polymérisation oléosoluble.

Les initiateurs oléosolubles sont avantageusement des peroxydes organiques oléosolubles ou des diazocomposés oléosolubles.

A titre d'exemples de peroxydes organiques oléosolubles, on peut citer les peroxydes tels que le peroxyde de dilauryle, de di-*tert*-butyle ou de dibenzoyle; les peresters tels que le *tert*-butylperpivalate, le peroxy-2-éthylhexanoate de *tert-*butyle et le pernéodécanoate de *tert*-butyle et les peroxydicarbonates tels que le peroxydicarbonate de diéthyle, de diisopropyle, de di-n-propyle, de di-2-éthylhexyle et de dimyristyle. A titre d'exemples de diazocomposés, on peut citer l'azobisisobutyronitrile et le ,2'-azobis(méthoxy-2,4-diméthylvaléronitrile).

Les initiateurs oléosolubles sont choisis de préférence parmi les peroxydes organiques oléosolubles et de manière particulièrement préférée parmi les peroxydes avec une préférence pour le peroxyde de dilauryle, et les peroxydicarbonates avec une préférence pour le peroxydicarbonate de dimyristyle.

La quantité d'initiateur de polymérisation oléosoluble mise en oeuvre varie avantageusement entre 0,2 et 3,5 ‰ en poids, de préférence entre 0,8 et 2 ‰ en poids par rapport au poids de monomère(s) mis en œuvre.

L'étape de polymérisation du VC comprise dans le procédé selon l'invention est effectuée en présence d'au moins un agent émulsionnant.

Par l'expression « au moins un », on entend désigner que l'étape de polymérisation est effectuée en présence d'un ou de plusieurs agents émulsionnants.

Les agents émulsionnants sont avantageusement des agents émulsionnants ioniques choisis parmi les agents émulsionnants anioniques, les agents émulsionnants cationiques et les agents émulsionnants amphotères. De préférence, ces agents émulsionnants sont choisis parmi les agents émulsionnants anioniques. De manière particulièrement préférée, ces agents émulsionnants sont choisis parmi les agents émulsionnants anioniques suivants: sulfates d'alkyle, sulfonates d'alkyle, sulfonates d'alkylaryle, sulfosuccinates de dialkyle et carboxylates d'alkyle. Ces sels peuvent être éventuellement éthoxylés et peuvent comprendre, comme contre-ion, un cation sodium, potassium, lithium, césium ou ammonium. De manière tout particulièrement préférée, ces agents émulsionnants sont choisis parmi les sels non éthoxylés sodiques suivants: sulfates d'alkyle tels que le dodécylsulfate de sodium ou le laurylsulfate de sodium par exemple, sulfonates d'alkyle tels que les sulfonates d'alkyles primaires ou secondaires sodiques par exemple, sulfonates d'alkylaryle tels que le dodécylbenzènesulfonate de sodium par exemple, sulfosuccinates de dialkyle, tels que le dioctylsulfosuccinate de sodium par exemple et carboxylates d'alkyle tels que les myristates de sodium et d'ammonium par exemple.

La quantité d'agent émulsionnant mise en œuvre varie avantageusement entre 0,1 et 3 % en poids par rapport au poids de monomère(s) mis en œuvre.

Lors de l'étape de polymérisation du VC, le milieu de polymérisation est avantageusement chauffé sous pression autogène à une température déterminée par la masse moléculaire que l'on désire obtenir pour le PVC.

La température de polymérisation du VC est avantageusement comprise entre 30 et 100°C, de préférence entre 30 et 90°C, plus particulièrement entre 45 et 85°C. La polymérisation est avantageusement effectuée sous une pression comprise entre 0,3 et 2,5 MPa, de préférence entre 0,5 et 1,5 MPa.

L'étape de polymérisation est avantageusement poursuivie jusqu'à ce que 60 à 98 % en poids, de préférence 80 à 95 % en poids du (des) monomère(s) soi(en)t converti(s) avec diminution concomitante de la pression autogène du VC au sein du réacteur.

En conséquence de la conversion incomplète du monomère, la quantité de ce dernier qui subsiste dans la dispersion aqueuse obtenue à la fin de l'étape de polymérisation doit être éliminée.

Cette élimination peut être opérée de manière conventionnelle par un dégazage de la dispersion.

L'étape de polymérisation comprise dans le procédé selon l'invention conduit à l'obtention d'un latex de PVC.

Dans la présente description, on entend définir par le terme «latex de PVC», un système fluide et colloïdal dans lequel la phase dispersée comprend le PVC et dans lequel la phase continue est l'eau.

Les latex (aussi appelés dispersions aqueuses) de PVC ainsi produits contiennent des particules polymériques élémentaires présentant des diamètres pouvant aller d'environ 10 à environ 5000 nm, de préférence d'environ 50 à environ 2500 nm.

La teneur en PVC du latex est avantageusement supérieure à 20 % en poids, de préférence supérieure à 30 % en poids, tout particulièrement supérieure à 35 % en poids. Elle est avantageusement inférieure à 60 % en poids et de préférence inférieure à 50 % en poids.

Le procédé selon l'invention comprend une étape selon laquelle on ajoute un latex d'additivation d'un polymère contenant des fonctions époxydes à un latex d'un PVC, de préférence au latex du PVC obtenu à l'issue d'une étape de polymérisation du VC, et éventuellement d'un ou plusieurs comonomères de celui-ci, effectuée en dispersion aqueuse en présence d'au moins un initiateur de polymérisation et d'au moins un agent émulsionnant conduisant à l'obtention d'un latex d'un PVC, pour obtenir un latex du PVC additivé du polymère contenant des fonctions époxydes.

Le latex d'additivation d'un polymère contenant des fonctions époxydes (aussi appelé latex d'additivation ci-après) peut être obtenu par tout moyen connu. Il peut ainsi être préparé par polymérisation en dispersion aqueuse ou bien en dispersant une résine/un latex d'un polymère contenant des fonctions époxydes dans de l'eau, en y ajoutant éventuellement les additifs habituels (en particulier un ou plusieurs agents émulsionnants) et/ou en faisant éventuellement appel à tout dispositif connu pour assurer une bonne dispersion (homogénéiseur tel que par exemple un moulin colloïdal).

Le latex d'additivation d'un polymère contenant des fonctions époxydes est avantageusement préparé par polymérisation en dispersion aqueuse d'un monomère éthylèniquement insaturé contenant au moins une fonction époxyde et éventuellement d'un comonomère de celui-ci en présence d'au moins un initiateur de polymérisation et d'au moins un agent émulsionnant.

Le latex d'additivation est de préférence préparé par polymérisation en émulsion aqueuse. Dans ce cas le latex d'additivation est donc avantageusement préparé en présence d'au moins un agent émulsionnant à titre de surfactant et d'au moins un initiateur de polymérisation hydrosoluble.

Toutes les définitions et limitations énoncées et décrites plus haut en rapport avec la polymérisation en dispersion aqueuse, l'agent émulsionnant et l'initiateur de polymérisation hydrosoluble utilisés pour l'étape de polymérisation du VC sont applicables, mutatis mutandis, à la préparation du latex d'additivation.

Le dodécylbenzènesulfonate de sodium est particulièrement préféré à titre d'agent émulsionnant et le persulfate d'ammonium à titre d'initiateur de polymérisation hydrosoluble.

La préparation du latex d'additivation ne nécessite pas avantageusement d'ajustement (réglage) du pH du milieu de polymérisation.

La température de polymérisation est avantageusement comprise entre 20 et 100°C, de préférence entre 30 et 90°C et plus particulièrement entre 45 et 85°C.

Le terme "latex d'additivation" signifie, au sens de la présente invention, un latex dont les caractéristiques sont telles qu'il peut être utilisé comme un additif que l'on peut ajouter à un latex avant séchage.

Le latex d'additivation est de préférence une dispersion de particules d'un polymère contenant des fonctions époxydes d'un diamètre avantageusement compris entre 10 et 1000 nm, de préférence compris entre 30 et 200 nm.

La teneur en polymère contenant des fonctions époxydes du latex d'additivation est avantageusement supérieure à 15 % en poids et de préférence supérieure à 20 % en poids.

Le terme «fonction époxyde» désigne, aux fins de la présente invention, l'éther cyclique contenant trois atomes à savoir deux atomes de carbone et un atome d'oxygène.

Le polymère contenant des fonctions époxydes est avantageusement un homopolymère ou un copolymère. Par copolymères, on entend les polymères qui comprennent le monomère contenant au moins une fonction époxyde, de préférence à titre de monomère principal c'est-à-dire présent à raison d'au moins 50% en poids du mélange de monomères, et au moins un autre monomère copolymérisable désigné comme comonomère. Ce comonomère peut contenir au moins une fonction époxyde ou non.

Le terme « monomère contenant au moins une fonction époxyde » désigne, aux fins de la présente invention, un monomère éthylèniquement insaturé contenant au moins une fonction époxyde. Le monomère contenant au moins une fonction époxyde est avantageusement choisi parmi
- les acrylates d'alkyle époxydé (avec une préférence pour l'acrylate de glycidyle aussi désigné comme l'acrylate de 2,3-époxy-propyle, l'acrylate de 2,3-époxy-butyle et l'acrylate de 3,4-époxy-butyle),
- les méthacrylates d'alkyle époxydé (avec une préférence pour le méthacrylate de glycidyle aussi désigné comme le méthacrylate de 2,3-époxy-propyle ou GMA, le méthacrylate de 2,3-époxy-butyle et le méthacrylate de 3,4-époxy-butyle),
- les 1,2-époxy-alcènes, parmi lesquels
   - les 1,2-époxy-butènes (avec une préférence pour le 1,2-époxy-butène-3),
   - les 1,2-époxy-pentènes, et
   - les 1,2-époxy-hexènes ;
- les alkylalcènes époxydés, parmi lesquels
   - les 1,2-époxy-alkylbutènes (avec une préférence pour le 1,2-époxy-méthylbutène-3),
   - les alkylpentènes époxydés,
   - les alkylhexènes époxydés,
- les alkylstyrènes époxydés (avec une préférence pour le glycidylstyrène, l'a-méthylglycidyl styrène, le glycidyl m-méthylstyrène, le glycidyl p-méthylstyrène, le glycidyl p-chlorostyrène et le glycidyl p-styrylcarboxylate), et
- les monomères allyliques glycidyliques (avec une préférence pour l'allylglycidylether aussi désigné comme l'allyl 2,3-époxypropyl éther, le 2-méthylallyl glycidyl éther et les allylphénolglycidyléthers comme l'o-allylphénolglycidyl éther, le m-allylphénolglycidyl éther et le p-allylphénolglycidyl éther).

De manière préférée, le monomère contenant au moins une fonction époxyde est choisi parmi les acrylates d'alkyle époxydé, les méthacrylates d'alkyle époxydé, les alkylstyrènes époxydés et les monomères allyliques glycidyliques, avec les préférences définies ci-dessus pour chacun d'entre eux.

De manière particulièrement préférée, le monomère contenant au moins une fonction époxyde est choisi parmi les acrylates d'alkyle époxydé, les méthacrylates d'alkyle époxydé et les monomères allyliques glycidyliques, avec les préférences définies ci-dessus pour chacun d'entre eux.

De manière tout particulièrement préférée, le monomère contenant au moins une fonction époxyde est choisi parmi l'acrylate de glycidyle, le méthacrylate de glycidyle (GMA) et l'allylglycidylether.

L'acrylate de glycidyle et le méthacrylate de glycidyle (GMA) sont vraiment tout particulièrement préférés.

Lorsque le polymère contenant des fonctions époxydes est un copolymère, le comonomère est avantageusement choisi parmi les monomères éthylèniquement insaturés avec une préférence pour les monomères (méth) acryliques répondant à la formule (I):

CH₂=CR₁R₂ (I)

dans laquelle R₁ est choisi parmi l'hydrogène et le groupe méthyle et R₂ est choisi parmi le groupe -CN et le groupe -CO-R₃ dans lequel R₃ est choisi parmi le groupe -OH, le groupe -O-R₄ avec R₄ choisi parmi les groupes alkyles linéaires ou branchés contenant de 2 à 18 atomes de carbone portant éventuellement un ou plusieurs groupes -OH, les groupes époxyalkyles contenant de 2 à 10 atomes de carbone et les groupes alkoxyalkyles contenant un total de 2 à 10 atomes de carbone et finalement R₃ est choisi parmi le groupe -NR₅R₆ dans lequel R₅ et R₆, qui sont identiques ou différents, sont choisis parmi l'hydrogène et les groupes alkyles contenant de 1 à 10 atomes de carbone, portant éventuellement un ou plusieurs groupes -OH.

De manière particulièrement préférée, le comonomère est choisi parmi les monomères (méth)acryliques répondant à la formule (I) ci-dessus dans laquelle R₁ est choisi parmi l'hydrogène et le groupe méthyle et R₂ est le groupe -CO-R₃ dans lequel R₃ est choisi parmi le groupe -OH et le groupe -O-R₄ avec R₄ choisi parmi les groupes alkyles linéaires ou branchés contenant de 2 à 18 atomes de carbone portant éventuellement un ou plusieurs groupes -OH, les groupes époxyalkyles contenant de 2 à 10 atomes de carbone et les groupes alkoxyalkyles contenant un total de 2 à 10 atomes de carbone.

Des exemples non limitatis de comonomère répondant à la formule (I) sont l'acrylate et le méthacrylate de méthyle, l'acrylate et le méthacrylate d'éthyle, l'acrylate et le méthacrylate de n-butyle, l'acrylate et le méthacrylate de 2-éthylhexyle, l'acrylate et le méthacrylate de 2-hydroxyéthyle, l'acrylate et le méthacrylate de glycidyle, l'acrylonitrile, le méthacrylonitrile, l'acide acrylique, l'acide méthacrylique, l'acrylamide, la N-isopropylacrylamine et la N-méthylolacrylamide.

Les comonomères préférés sont l'acrylate et le méthacrylate de méthyle, l'acrylate et le méthacrylate d'éthyle, l'acrylate et le méthacrylate de n-butyle, l'acrylate et le méthacrylate de 2-éthylhexyle, l'acrylate et le méthacrylate de 2-hydroxyéthyle et l'acrylate et le méthacrylate de glycidyle.

Dans le contexte de la présente invention, le polymère contenant des fonctions époxydes est de préférence un homopolymère ou un copolymère de l'acrylate de glycidyle et du méthacrylate de glycidyle (GMA).

Quand il est un copolymère, le comonomère est de préférence choisi parmi les monomères (méth) acryliques répondant à la formule (I) ci-dessus, avec les préférences définies ci-dessus et avec une préférence toute particulière choisi parmi l'acrylate de n-butyle et le méthacrylate de n-butyle.

Dans le contexte de la présente invention, le polymère contenant des fonctions époxydes est de manière particulièrement préférée un homopolymère ou un copolymère du méthacrylate de glycidyle. Dès lors, le latex d'additivation est de manière particulièrement préférée un latex d'un polymère du méthacrylate de glycidyle.

Il est enfin de manière tout particulièrement préférée un homopolymère du méthacrylate de glycidyle. Dès lors, le latex d'additivation est de manière tout particulièrement préférée un latex d'un homopolymère du méthacrylate de glycidyle.

Le latex d'additivation est donc de manière tout particulièrement préférée préparé par polymérisation en dispersion aqueuse d'un monomère contenant au moins une fonction époxyde, de préférence du méthacrylate de glycidyle, en présence d'au moins un initiateur de polymérisation et d'au moins un agent émulsionnant.

Le latex d'additivation est avantageusement ajouté en une quantité de 0.1 à 10 % en poids par rapport au poids total du PVC.

Dans le procédé selon l'invention, le latex d'additivation est ajouté en une quantité avantageusement d'au moins 0.1%, de préférence d'au moins 0.5%, de manière particulièrement préférée d'au moins 1% et de manière tout particulièrement préférée d'au moins 2% en poids par rapport au poids total du PVC. Le latex d'additivation est ajouté en une quantité avantageusement d'au plus 10%, de manière préférée d'au plus 8% et de manière particulièrement préférée d'au plus 6% en poids par rapport au poids total du PVC.

Lorsque l'on exprime dans le texte de la présente demande de brevet, le % en poids du latex d'additivation par rapport au poids total du PVC, il faut entendre, qu'aux fins de la présente invention, on entend désigner à chaque fois, le poids des particules solides du latex d'additivation, en d'autres termes le poids du polymère contenant des fonctions époxydes, par rapport au poids total du PVC, en d'autres termes, par rapport au poids total des particules solides du latex de PVC (matières sèches du latex).

Le procédé selon l'invention comprend une étape de séparation du polymère du chlorure de vinyle additivé du polymère contenant des fonctions époxydes du latex le contenant conduisant à l'obtention dudit polymère du chlorure de vinyle.

Après l'étape d'ajout du latex d'additivation, le latex de PVC additivé du polymère contenant des fonctions époxydes est donc traité de manière à en récupérer le PVC, de préférence sous la forme d'une résine.

Par « résine », on entend désigner aux fins de la présente invention, le polymère à l'état sec, de préférence sous forme de poudre.

L'étape de séparation peut être réalisée par tout procédé de séparation connu ou par leur combinaison ; elle est de préférence réalisée par l'un des procédés suivants ou par une combinaison de ceux-ci :
- filtration ou ultrafiltration
- coagulation
- décantation
- essorage
- écaillage
- lyophilisation
- séchage, préférentiellement par atomisation

L'étape de séparation est de manière particulièrement préférée réalisée par filtration suivie d'un séchage par atomisation.

Le séchage par atomisation peut être réalisé au moyen de tout type de sécheur atomiseur connu ; il est de préférence réalisé:
- soit au moyen de sécheurs atomiseurs équipés d'un dispositif tournant à grande vitesse et percé de fins orifices desquels giclent les latex dans un courant d'air chaud;
- soit au moyen de sécheurs atomiseurs équipés d'une ou plusieurs buses de pulvérisation à un ou plusieurs fluides; le fluide est le latex, les autres fluides éventuels (désignés habituellement «fluides de pulvérisation») sont de l'air, de la vapeur ou des mélanges d'air et de vapeur; les fluides sont pulvérisés habituellement dans un courant d'air chaud.

Après l'étape de séparation, le PVC additivé du polymère contenant des fonctions époxydes, de préférence sous forme de résine, peut être utilisé tel quel ou être traité de manière à en régler la granulométrie.

S'il est traité de manière à en régler la granulométrie, ce traitement peut être réalisé par tout procédé connu ou par leur combinaison. Le traitement de réglage de la granulométrie est de préférence réalisé par l'un des procédés suivants ou par une combinaison de ceux-ci :
- broyage
- classification
- tamisage.

Le traitement de réglage de la granulométrie est de manière particulièrement préférée réaliser par broyage.

Le PVC additivé d'un polymère contenant des fonctions époxydes obtenable par le procédé selon l'invention comprend un polymère contenant des fonctions époxydes et se caractérise avantageusement par une teneur en épichlorohydrine inférieure ou égale à 10 ppm, de préférence inférieure ou égale à 8 ppm, de manière particulièrement préférée inférieure ou égale à 5 ppm et de manière tout particulièrement préférée inférieure ou égale à 3 ppm.

Par l'expression «teneur en épichlorohydrine caractérisant le PVC», on entend désigner, aux fins de la présente invention, la teneur en épichlorohydrine mesurée sur un chromatographe en phase gazeuse couplé à un spectromètre de masse (technique d'espace de tête ou désorption thermique) lorsque le PVC est soumis à une sollicitation thermique à 180°C pendant 15 minutes.

Toutes les définitions et limitations énoncées et décrites plus haut en rapport avec le procédé selon l'invention sont applicables, mutatis mutandis, au PVC lui-même.

Ainsi, le PVC comprend de préférence un polymère du méthacrylate de glycidyle.

Le PVC obtenu par le procédé selon l'invention peut être utilisé pour la préparation de films et de revêtements.

Toutes les définitions et limitations énoncées et décrites plus haut en rapport avec le procédé selon l'invention sont applicables, mutatis mutandis, à l'utilisation du PVC lui-même.

Enfin, le PVC obtenu par le procédé selon l'invention peut être utilisé pour fabriquer un article ou partie d'article.

Toutes les définitions et limitations énoncées et décrites plus haut en rapport avec le procédé selon l'invention sont applicables, mutatis mutandis, aux articles fabriqués.

Les exemples qui suivent sont destinés à illustrer l'invention sans pour autant en limiter la portée.

### Exemple 1R (comparatif)

### Polymérisation

Dans un autoclave de mélange de 35 L équipé d'un agitateur et d'une double enveloppe, on a introduit tout d'abord 17.4 kg d'eau déminéralisée et 9.9 g d'un alcool polyvinylique de taux d'hydrolyse égal à 72%mol et présentant une viscosité (solution aqueuse à 4% en poids) de 5 mPa.s.

On a ensuite introduit 4.3 g de peroxyde de lauroyle, 1.4 g d'hydroxyde de sodium, 0. 6 g de peroxyde d'hydrogène et 3.7 g de chloroformiate d'éthyle.

On a alors introduit 124.3 g de GMA et effectué le vide sur l'autoclave. On a ensuite introduit 12.4 kg de VC dans l'autoclave et on y a maintenu une agitation vive pour y constituer une dispersion aqueuse homogène de gouttelettes du VC. On a porté le contenu du réacteur à 70°C ; le moment auquel cette température a été atteinte constituant le moment tₒ. Une fois la diminution de pression détectée (0.2 MPa), on a relevé la durée écoulée depuis tₒ et on a ajouté 1.2 g de BHT (2,6-di (tert-butyl)hydroxytoluene) et 5.0 g d'huile de soja époxydée.

### Opérations de fin

On a refroidi le réacteur puis on a vidangé le réacteur vers un dégazeur dans lequel on a procédé à un traitement d'épuration en VC résiduaire. On a filtré le slurry obtenu sur un tamis à mailles distantes de 500 µm. On a recueilli les grumeaux humides refusés sur ce tamis. Ces grumeaux humides ont été séchés à l'étuve. Les grumeaux secs ont été pesés.

### Séchage du slurry et récupération de la résine

Le slurry a été essoré puis séché sur lit fluide et la résine obtenue a été recueillie sous forme de poudre.

### Evaluation de la stabilité thermique

On a évalué la stabilité thermique de la résine broyée (0.5 g) au moyen d'un Thermomat PVC 763 construit par la firme Metrohm.

L'échantillon de PVC chauffé à 180°C se décompose avec dégagement d'HCl qui est entraîné par un courant gazeux (7 L/h de N₂) dans une cellule de mesure où il est absorbé par de l'eau ultrapure. La concentration en HCl de cette eau est mesurée en continu par conductimétrie.

La stabilité thermique conventionnelle a été définie comme le temps requis pour que la réaction de déshydrochloration à la température de 180°C conduise à une conductimétrie de 50 µS/cm. Elle est exprimée en minutes et secondes.

### Evaluation de la teneur en GMA dans la résine

La teneur en GMA dans la résine de PVC a été calculée à partir des résultats d'analyse élémentaire du chlore. L'analyse élémentaire du chlore a été réalisée par minéralisation d'environ 100 mg de la résine de PVC en bombe de Wurzschmitt au Na₂O₂ et éthylène glycol suivie d'une acidification par HNO₃ et un dosage potentiométrique avec AgNO₃ 0.1N. La teneur en chlore étant relative à la proportion de PVC dans la résine, il était alors aisé d'en déduire la teneur en GMA dans la résine. Celle-ci est exprimée en pourcentage.

### Evaluation de la teneur en épichlorohydrine et en GMA résiduaire

Les teneurs en épichlorohydrine et en GMA résiduaire dans le PVC ont été mesurées par la technique d'espace de tête sur un chromatographe en phase gazeuse couplé à un spectromètre de masse (GC-MS). Pour cela, 2 g de résine broyée ont été chauffés à 180°C pendant 15 minutes et l'atmosphère au-dessus de l'échantillon a été analysée par GC-MS. La teneur est exprimée en ppm par rapport au poids de la résine. Une valeur indiquée comme supérieure à 200 ppm signifie que la teneur en épichlorohydrine est très importante et bien supérieure aux valeurs ciblées par la technique d'analyse susmentionnée (saturation).

Dans cet exemple:
- la polymérisation a duré 6h55 (mais la chute de pression de 0.2 MPa n'a pas été atteinte);
- la quantité de grumeaux secs (exprimée en ‰ du VC introduit) s'élevait à 10.5;
- la stabilité thermique de la résine était de 46 minutes et 12 secondes;
- la teneur en GMA de la résine était de 6.2 % ;
- la teneur en épichlorohydrine dans la résine était supérieure à 200 ppm et la teneur en GMA résiduaire dans la résine était de 7 ppm.

### Exemple 2R (comparatif)

On a reproduit l'exemple 1R, sauf que:
- le GMA a été introduit en cours de polymérisation entre t₀ et t₀+1h30 au lieu d'être introduit avant tₒ. Dans cet exemple:
- la polymérisation a duré 3h52;
- la quantité de grumeaux secs (exprimée en ‰ du VC introduit) s'élevait à 9.6;
- la stabilité thermique de la résine était de 25 minutes et 48 secondes;
- la teneur en GMA de la résine était de 1.0 % ;
- la teneur en épichlorohydrine dans la résine (mesurée de la manière décrite ci-dessus) était supérieure à 200 ppm et la teneur en GMA résiduaire dans la résine était de 3 ppm.

La teneur en épichlorohydrine a été mesurée au moyen d'une autre technique d'analyse. Ainsi, la teneur en épichlorohydrine a été mesurée par GC-MS parmi les composés volatils extraits par une désorption thermique de la résine pendant 15 minutes à 180°C. La teneur exprimée en ppm par rapport au poids de la résine, a été évaluée à 130 ppm correspondant à la saturation atteinte par cette technique.

### Exemple 3R (comparatif)

On a reproduit l'exemple 1R, sauf que:
- le GMA a été introduit en cours de polymérisation entre t0+1h30 et t0+3h00 au lieu d'être introduit avant tₒ. Dans cet exemple:
- la polymérisation a duré 2h50;
- la quantité de grumeaux secs (exprimée en ‰ du VC introduit) s'élevait à 11.4;
- la stabilité thermique de la résine était de 20 minutes 24 secondes ;
- la teneur en GMA de la résine était de 0.6 % ;
- la teneur en épichlorohydrine dans la résine était supérieure à 200 ppm et la teneur en GMA résiduaire dans la résine était de 77 ppm.

### Exemple 4R (comparatif)

### Préparation du PGMA

Le polymère de méthacrylate de glycidyle a été fourni par la société Specific Polymers basée à Montpellier (France). Il s'agissait d'un cotélomère du GMA avec l'acrylate de n-butyle (ratio molaire 72%:28% dans le copolymère) obtenu par cotélomérisation directe en présence de CCl₃Br comme agent de transfert.

Le produit fourni était un liquide visqueux translucide (Mₙ = 682 g/mol, M_{w} = 1049 g/mol, M_{w}/Mₙ = 1.54 mesurés par chromatographie d'exclusion stérique avec un étalonnage PMMA).

### Préparation du mélange PVC-PGMA

0.5 g de PGMA ont été dispersé dans 3 g d'acétone et ce mélange a été introduit dans 10 g de résine PVC (SOLVIN®260RF). L'ensemble a été mélangé à la main pour obtenir un cake qui a ensuite été séché sous vide à 45°C pendant 4 heures. Le mélange obtenu a été recueilli sous forme de poudre.

### Evaluation de la stabilité thermique

On a évalué la stabilité thermique de la poudre obtenue (0.5 g) au moyen d'un Thermomat PVC 763 construit par la firme Metrohm comme décrit à l'exemple 1R.

Dans cet exemple, la stabilité thermique de la résine était de 52 minutes 48 secondes. La stabilité thermique de la résine PVC SOLVIN®260RF mesurée dans les mêmes conditions était de 18 minutes 36 secondes.

La teneur en épichlorohydrine dans le mélange a été mesurée par GC-MS et désorption thermique de la même manière et dans la même série d'analyses que la résine décrite à l'exemple 2R. Elle a été estimée comme étant 10 fois inférieure à la teneur mesurée pour la résine obtenue à l'exemple 2R, c'est-à-dire supérieure à 10 ppm.

### Exemple 5R (comparatif)

Dans un réacteur de 3 L équipé d'un agitateur et d'une double enveloppe, on a préparé un latex de poly(methacrylate de glycidyle) (PGMA) par une étape de polymérisation en émulsion aqueuse effectuée à 70°C (ratio eau/méthacrylate de glycidyle (GMA) = 3.5) en présence de dodécylbenzènesulfonate de sodium (10.5% en poids/GMA) comme agent émulsionnant et de persulfate d'ammonium (0.375% en poids/GMA) comme initiateur hydrosoluble de polymérisation.

On a vidangé le latex du réacteur. On a filtré le latex sur un tamis à mailles distantes de 500 µm. On a ensuite introduit le latex dans un réservoir de stockage. Le rendement massique de la réaction était quantitatif (>98%) et confirmé par analyse RMN ¹H avec notamment une teneur en monomère résiduaire négligeable (<1%).

On a prélevé un échantillon de latex dans le réservoir de stockage et on en a mesuré la teneur en matières sèches par thermobalance à une température de 140°C la teneur en matières sèches du latex de PGMA était de 22.4 %.

On a déterminé également la distribution des particules élémentaires de polymère du latex de PGMA par diffusion de la lumière au moyen d'un appareil de la société Malvern. La distribution des particules élémentaires de polymère du latex de PGMA était unimodale; le diamètre moyen (d50) de ces particules élémentaires valait 115 nm.

Le latex de PGMA obtenu a été séché sous vide à température ambiante pour obtenir une résine PGMA qui a ensuité été mélangée, à température ambiante, à du di-isononylphtalate (DINP), à raison de 85 parts en poids de DINP pour 4 parts en poids de la résine PGMA.

Il n'a néanmoins pas été possible de solubiliser correctement la résine de PGMA dans le plastifiant. La résine est restée sous forme de paillettes/grumeaux et il n'a pas été possible d'obtenir une pâte homogène, ce qui a empêché la réalisation d'un plastisol de PVC par ajout additionnel de 100 parts de PVC.

### Exemple 6R (comparatif)

### Polymérisation

Dans un autoclave de 25 L équipé d'un agitateur et d'une double enveloppe, on a introduit tout d'abord 11.5 kg d'eau déminéralisée, 49 mg de sulfate de cuivre pentahydraté. On a fermé l'autoclave et on a mis l'agitateur en marche. On a ensuite effectué le vide sur l'autoclave. On a ensuite introduit 8.0 kg de VC dans l'autoclave et on y a maintenu une agitation vive pour y constituer une dispersion aqueuse homogène de gouttelettes du VC.

On a porté le contenu du réacteur à 48°C. Une fois cette température atteinte (tₒ), on a introduit 29 mL d'une solution d'ammoniaque (à 223 g/L) et 3.0 g de persulfate d'ammonium (APS) (0.34‰ du VC total). Durant la polymérisation, 96.3 g d'un mélange de laurylsulfate de sodium et de dioctylsufosuccinate de sodium ont été introduits (entre tₒ + 0h30 et tₒ + 2h30) ainsi que 0.8 kg de VC (injecté à tₒ + 1h30). La polymérisation a été régulée en injectant si nécessaire la quantité adéquate de sulfite de sodium entre t₀ et la chute de pression afin de maintenir un certain écart de température entre la double enveloppe et l'autoclave (3°C).

Une fois la diminution de pression détectée, on a relevé la durée écoulée depuis tₒ et on a porté le contenu du réacteur à une température plus élevée.

### Opérations de fin

On a procédé à un traitement d'épuration en VC résiduaire puis ajouté au latex 14.5 g de carbonate de soude et 9.6 g d'hydroxyde de lithium.

On a vidangé le latex et on a assaini le réacteur.

On a recueilli le croûtage humide présent à l'intérieur du réacteur, notamment sur ses parois et sur les pâles de l'agitateur. Après pesée, le croûtage humide a été séché à l'étuve. Le croûtage sec a été pesé à son tour.

On a filtré le latex sur un tamis à mailles distantes de 1 mm. On a recueilli les grumeaux humides refusés sur ce tamis. Après pesée, les grumeaux humides ont été séchés à l'étuve. Les grumeaux secs ont été pesés à leur tour.

### Séchage du latex et récupération de la résine

Le latex a été séché par atomisation et la résine obtenue a été broyée.

### Evaluation de la stabilité thermique

On a évalué la stabilité thermique de la poudre obtenue (0.5 g) au moyen d'un Thermomat PVC 763 construit par la firme Metrohm comme décrit à l'exemple 1R.

### Evaluation de la taille des particules

Les tailles des particules de polymères dans le latex ainsi que pour la résine (avant et après broyage) ont été mesurées de la même manière que décrit à l'exemple 1R

### Evaluation de la taille des particules

On a déterminé également la distribution des particules élémentaires de polymère du latex de PVC par photosédimentométrie au moyen d'un appareil CPS de la société CPS Instruments Inc. Le diamètre obtenu est le diamètre mesuré au sommet du pic de la distribution en poids des tailles de particules

La taille des particules de polymère dans la résine de PVC additivée après séchage et avant ou après broyage a été mesurée au moyen d'un appareil d'analyse granulométrique par diffusion de la lumière de type Mastersizer 2000 fabriqué par la firme Malvern. La taille moyenne donnée correspond à la valeur d50 exprimée en µm.

### Evaluation de la teneur en GMA dans la résine

La teneur en GMA dans la résine de PVC a été mesurée de la même manière que décrit à l'exemple 1R.

### Evaluation de la teneur en épichlorohydrine et en GMA résiduaire

Les teneurs en épichlorohydrine et en GMA résiduaire dans le PVC ont été mesurées de la même manière que décrit pour l'exemple 1R

Dans cet exemple:
- la polymérisation a duré 346 minutes;
- la quantité de grumeaux et de croûtages secs (exprimée en % du VC introduit) s'élevait à 6.6;
- la distribution des particules élémentaires de polymère du latex de PVC était unimodale avec un diamètre mesuré par photosédimentométrie de 430 nm ;
- la taille moyenne (d50) des particules de polymère dans la résine de PVC additivé était de 42 µm avant broyage et de 23 µm après broyage ;
- la stabilité thermique de la résine broyée était de 53.4 minutes ;
- l'analyse GC-MS a montré qu'il n'y avait pas d'épichlorohydrine ni de GMA résiduaire dans la résine.

### Exemple 7 (selon l'invention)

### Préparation d'un latex PGMA

Dans un réacteur de 15 L équipé d'un agitateur et d'une double enveloppe, on a préparé un latex d'additivation de poly(methacrylate de glycidyle) (PGMA) par une étape de polymérisation en émulsion aqueuse effectuée à 70°C (ratio eau/methacrylate de glycidyle (GMA) = 3.5) en présence de dodécylbenzènesulfonate de sodium (1.05% en poids /GMA) comme agent émulsionnant et de persulfate d'ammonium (0.15% en poids/GMA) comme initiateur hydrosoluble de polymérisation.

On a vidangé le latex du réacteur. On a filtré le latex sur un tamis à mailles distantes de 500 µm. On a ensuite introduit le latex dans un réservoir de stockage. Le rendement massique de la réaction était quantitatif (>98%) et confirmé par analyse RMN ¹H avec notamment une teneur en monomère résiduaire négligeable (<1%).

On a prélevé un échantillon de latex dans le réservoir de stockage et on en a mesuré la teneur en matières sèches par thermobalance à une température de 140°C la teneur en matières sèches du latex semence PGMA était de 22.4 %.

On a déterminé également la distribution des particules élémentaires de polymère du latex de PGMA par diffusion de la lumière au moyen d'un appareil de la société Malvern. La distribution des particules élémentaires de polymère du latex de PGMA était unimodale; le diamètre moyen (d50) de ces particules élémentaires valait 111 nm.

### Préparation d'un latex de PVC additivé de PGMA

On a reproduit l'exemple 6R, sauf qu'une proportion bien définie de latex de PGMA a été ajoutée au latex PVC de l'exemple 6R après l'étape intitulée « Opérations de fin" » et avant l'étape de séchage, en proportion de 2% en poids par rapport à la quantité totale de PVC, soit 343.9 g (à 22.2%) dans 3.8 kg de latex PVC de l'exemple 6R (à 40.2%).

Dans cet exemple :
- la taille moyenne (d50) des particules de polymère dans la résine de PVC additivé était de 47 µm avant broyage et de 20 µm après broyage ;
- la stabilité thermique de la résine broyée était de 126 minutes ;
- la teneur mesurée en GMA de la résine était de 1.5 %. ; et
- la teneur en épichlorohydrine dans la résine était à l'état de traces.

La résine de PVC additivée obtenue a été mélangée, à température ambiante, à du di-isononylphtalate (DINP), à raison de 81.8 parts en poids de DINP pour 100 parts en poids de la résine. Un plastisol homogène a été obtenu.

### Exemple 8 (selon l'invention)

On a reproduit l'exemple 7, sauf que:
- le latex PGMA dont la synthèse est décrite à l'exemple 7 a été utilisé non pas à 2% mais à 4% en poids par rapport à la quantité totale de PVC, soit 687.9 g (à 22.2%) dans 3.8 kg de latex PVC de l'exemple 6R (à 40.2%). Dans cet exemple :
- la taille moyenne (d50) des particules de polymère dans la résine de PVC additivé était de 40 µm avant broyage et de 21 µm après broyage ;
- la stabilité thermique de la résine broyée était de 186.6 minutes ;
- la teneur mesurée en GMA de la résine était de 3.3 % ; et
- la teneur en épichlorohydrine dans la résine était à l'état de traces.

La résine de PVC additivée obtenue a été mélangée, à température ambiante, à du di-isononylphtalate (DINP), à raison de 81.8 parts en poids de DINP pour 100 parts en poids de la résine. Un plastisol homogène a été obtenu.

### Exemple 9 (selon l'invention)

On a reproduit l'exemple 7, sauf que:
- le latex PGMA dont la synthèse est décrite à l'exemple 7 a été utilisé non pas à 2% mais à 6% en poids par rapport à la quantité totale de PVC, soit 1031.8 g (à 22.2%) dans 3.8 kg de latex PVC de l'exemple 6R (à 40.2%).
Dans cet exemple :
- la taille moyenne (d50) des particules de polymère dans la résine de PVC additivé était de 51 µm avant broyage et de 28 µm après broyage ;
- la stabilité thermique de la résine broyée était de 284.4 minutes ; et
- la teneur en épichlorohydrine dans la résine était à l'état de traces.

La résine de PVC additivée obtenue a été mélangée, à température ambiante, à du di-isononylphtalate (DINP), à raison de 81.8 parts en poids de DINP pour 100 parts en poids de la résine. Un plastisol homogène a été obtenu.

La comparaison des résultats des exemples 7 à 9 (selon l'invention) avec ceux de l'exemple 6R (comparatif) fait apparaître une très forte amélioration de la stabilité thermique des résines obtenues. Les résines obtenues aux exemples 7 à 9 se caractérisent par une taille moyenne (d50) des particules de polymère dans la résine similaire à celle de la résine obtenue à l'exemple 6R.

La comparaison des exemples 7 à 9 selon l'invention avec les exemples 1R à 4R montrent que les exemples selon l'invention conduisent à des résines se caractérisant par une teneur en épichlorhydrine plus basse (traces) que celle obtenue pour les copolymères statistiques (>200 ppm, exemples 1R à 3R) ou pour le mélange d'une résine PVC avec un polymère du GMA (>10 ppm, exemple 4R).

La comparaison des exemples 7 à 9 selon l'invention avec l'exemple 5R montre que grâce au procédé selon l'invention, des plastisols homogènes ont pu être obtenus, ce qui n'a pas été le cas pour l'exemple 5R où il n'a pas été possible de disperser le PGMA dans le plastifiant.

## Revendications

1. Procédé pour la préparation d'un polymère du chlorure de vinyle contenant au moins 60 % en poids d'unités monomériques dérivées du chlorure de vinyle additivé d'un polymère contenant des fonctions époxydes comprenant
• une étape selon laquelle on ajoute un latex d'additivation d'un polymère contenant des fonctions époxydes à un latex d'un polymère du chlorure de vinyle pour obtenir un latex du polymère du chlorure de vinyle additivé du polymère contenant des fonctions époxydes ; et
• une étape de séparation du polymère du chlorure de vinyle additivé du polymère contenant des fonctions époxydes du latex le contenant conduisant à l'obtention dudit polymère du chlorure de vinyle.

2. Procédé selon la revendication 1, **caractérisé en ce qu'**il comprend
• une étape de polymérisation du VC, et éventuellement d'un ou plusieurs comonomères de celui-ci, effectuée en dispersion aqueuse en présence d'au moins un initiateur de polymérisation et d'au moins un agent émulsionnant conduisant à l'obtention d'un latex d'un PVC;
• une étape selon laquelle on ajoute un latex d'additivation d'un polymère contenant des fonctions époxydes au latex du PVC obtenu à l'issue de l'étape de polymérisation pour obtenir un latex du PVC additivé du polymère contenant des fonctions époxydes ; et
• une étape de séparation du polymère du chlorure de vinyle additivé du polymère contenant des fonctions époxydes du latex le contenant conduisant à l'obtention dudit polymère du chlorure de vinyle.

3. Procédé selon la revendication 1 ou 2, **caractérisé en ce que** le latex d'additivation d'un polymère contenant des fonctions époxydes est préparé par polymérisation en dispersion aqueuse d'un monomère éthylèniquement insaturé contenant au moins une fonction époxyde et éventuellement d'un comonomère de celui-ci en présence d'au moins un initiateur de polymérisation et d'au moins un agent émulsionnant.

4. Procédé selon la revendication 3, **caractérisé en ce que** le latex d'additivation d'un polymère contenant des fonctions époxydes est préparé par polymérisation en émulsion aqueuse.

5. Procédé selon l'une quelconque des revendications 1 à 4, **caractérisé en ce que** le latex d'additivation d'un polymère contenant des fonctions époxydes est ajouté en une quantité de 0.1 à 10 % en poids des particules solides du latex d'additivation par rapport au poids total des particules solides du latex de PVC (matières sèches du latex).

6. Procédé selon l'une quelconque des revendications 1 à 5, **caractérisé en ce que** le latex d'additivation d'un polymère contenant des fonctions époxydes est un latex d'un polymère du méthacrylate de glycidyle.

7. Procédé selon l'une quelconque des revendications 2 à 6, **caractérisé en ce que** l'étape de polymérisation du chlorure de vinyle est effectuée en émulsion aqueuse.

8. Procédé selon l'une quelconque des revendications 1 à 7, **caractérisé en ce que** l'étape de séparation est réalisée par filtration suivie d'un séchage par atomisation.

## Patentansprüche

1. Verfahren zur Herstellung eines Vinylchloridpolymers, das wenigstens 60 Gew.-% monomere Einheiten enthält, die von Vinylchlorid abgeleitet sind, dem ein Polymer additiviert ist, das Epoxidfunktionen enthält, umfassend:
• einen Schritt, gemäß dem ein Latex zur Additivierung eines Polymers, das Epoxidfunktionen enthält, zu einem Latex eines Vinylchloridpolymers hinzugefügt wird, wobei man einen Latex des Vinylchloridpolymers, das mit dem Polymer, das Epoxidfunktionen enthält, additiviert ist, erhält; und
• einen Schritt des Abtrennens des Vinylchloridpolymers, das mit dem Polymer, das Epoxidfunktionen enthält, additiviert ist, aus dem Latex, das es enthält, was dazu führt, dass man das Vinylchloridpolymer erhält.

2. Verfahren gemäß Anspruch 1, **dadurch gekennzeichnet, dass** es umfasst:
• einen Schritt der Polymerisation des Vinylchlorids und gegebenenfalls eines oder mehrerer Comonomere davon, durchgeführt in wässriger Dispersion in Gegenwart wenigstens eines Polymerisationsstarters und wenigstens eines Emulgators, was dazu führt, dass man einen Latex eines PVC erhält;
• einen Schritt, gemäß dem ein Latex zur Additivierung eines Polymers, das Epoxidfunktionen enthält, zu dem PVC-Latex, der am Ende des Polymerisationsschritts erhalten wurde, wobei man einen Latex des PVC, das mit dem Polymer, das Epoxidfunktionen enthält, additiviert ist, erhält; und
• einen Schritt des Abtrennens des Vinylchloridpolymers, das mit dem Polymer, das Epoxidfunktionen enthält, additiviert ist, aus dem Latex, das es enthält, was dazu führt, dass man das Vinylchloridpolymer erhält.

3. Verfahren gemäß Anspruch 1 oder 2, **dadurch gekennzeichnet, dass** der Latex zur Additivierung eines Polymers, das Epoxidfunktionen enthält, durch Polymerisation eines ethylenisch ungesättigten Monomers, das wenigstens eine Epoxidfunktion enthält, und gegebenenfalls eines Comonomers desselben in wässriger Dispersion in Gegenwart wenigstens eines Polymerisationsstarters und wenigstens eines Emulgators hergestellt wird.

4. Verfahren gemäß Anspruch 3, **dadurch gekennzeichnet, dass** der Latex zur Additivierung eines Polymers, das Epoxidfunktionen enthält, durch Polymerisation in wässriger Emulsion hergestellt wird.

5. Verfahren gemäß einem der Ansprüche 1 bis 4, **dadurch gekennzeichnet, dass** der Latex zur Additivierung eines Polymers, das Epoxidfunktionen enthält, in einer Menge von 0,1 bis 10 Gew.-% der festen Teilchen des Additivierungslatex hinzugefügt wird, bezogen auf das Gesamtgewicht der festen Teilchen des PVC-Latex (Trockenmasse des Latex).

6. Verfahren gemäß einem der Ansprüche 1 bis 5, **dadurch gekennzeichnet, dass** der Latex zur Additivierung eines Polymers, das Epoxidfunktionen enthält, ein Latex eines Glycidylmethacrylatpolymers ist.

7. Verfahren gemäß einem der Ansprüche 2 bis 6, **dadurch gekennzeichnet, dass** der Schritt der Polymerisation des Vinylchlorids in wässriger Emulsion durchgeführt wird.

8. Verfahren gemäß einem der Ansprüche 1 bis 7, **dadurch gekennzeichnet, dass** der Schritt des Abtrennens durch Filtration mit anschließender Sprühtrocknung erfolgt.

## Claims

1. A method for preparing a polymer of vinyl chloride containing at least 60 % by weight of monomeric units derived from vinyl chloride to which is added a polymer containing epoxide functions comprising
• a step according to which an additive latex of a polymer containing epoxide functions is added to a latex of a polymer of vinyl chloride to obtain a latex of the polymer of vinyl chloride to which is added the polymer containing epoxide functions; and
• a step of separating the polymer of vinyl chloride to which is added the polymer containing epoxide functions from the latex containing it, leading to the production of said polymer of vinyl chloride.

2. The method according to claim 1, **characterized in that** it comprises
• a step of polymerization of the VC, and optionally of one or more co-monomer(s) thereof, carried out in aqueous dispersion in the presence of at least one polymerization initiator and at least one emulsifying agent leading to the production of a PVC latex;
• a step according to which an additive latex of a polymer containing epoxide functions is added to the PVC latex obtained at the end of the polymerization step in order to obtain a PVC latex to which is added the polymer containing epoxide functions; and
• a step of separating the polymer of vinyl chloride to which is added the polymer containing epoxide functions from the latex containing it, leading to the production of said polymer of vinyl chloride.

3. The method according to claim 1 or 2, **characterized in that** the additive latex of a polymer containing epoxide functions is prepared by polymerization in aqueous dispersion of an ethylenically unsaturated monomer containing at least one epoxide function and optionally a comonomer thereof in the presence of at least one polymerization initiator and at least one emulsifying agent.

4. The method according to claim 3, **characterized in that** the additive latex of a polymer containing epoxide functions is prepared by polymerization in aqueous emulsion.

5. The method according to any one of claims 1 to 4, **characterized in that** the additive latex of a polymer containing epoxide functions is added in an amount of 0.1 to 10 % by weight of the solid particles of the additive latex relative to the total weight of the solid particles of the PVC latex (dry matter of the latex).

6. The method according to any one of claims 1 to 5, **characterized in that** the additive latex of a polymer containing epoxide functions is a latex of a polymer of glycidyl methacrylate.

7. The method according to any one of claims 2 to 6, **characterized in that** the vinyl chloride polymerization step is carried out in aqueous emulsion.

8. The method according to any one of claims 1 to 7, **characterized in that** the separation step is carried out by filtration followed by spray drying.
